# EUROPEAN PATENT APPLICATION

(11) **EP 4 660 779 A1**
(43) Date of publication of application: **10.12.2025**
(21) Application number: 24201903.2
(22) Date of filing: 23.09.2024
(51) Int. Cl.: G06F 3/16

(54) **INFORMATION PROCESSING SYSTEM AND PROGRAM**

(30) Priority: 05.06.2024 JP 2024091534
(71) Applicant: FUJIFILM Business Innovation Corp., Minato-ku Tokyo (JP)
(72) Inventor: IKEDA, Nanaka, Ebina-shi, Kanagawa (JP); SASAKI, Hirotake, Ebina-shi, Kanagawa (JP); MAEKAWA, Shinichi, Yokohama-shi, Kanagawa (JP); TAKEUCHI, Ko, Yokohama-shi, Kanagawa (JP); SUDO, Masami, Yokohama-shi, Kanagawa (JP); NIMIYA, Hiroshi, Yokohama-shi, Kanagawa (JP); YOSHIDA, Arisa, Yokohama-shi, Kanagawa (JP); EGAWA, Satoshi, Yokohama-shi, Kanagawa (JP); USAMI, Yukiko, Yokohama-shi, Kanagawa (JP); NISHIKAWA, Masaki, Yokohama-shi, Kanagawa (JP)
(74) Representative: Kurig, Thomas

(57) **Abstract**

An information processing system includes a processor, in which the processor is configured to: specify a notification situation, which is a situation of notification that is related to an utterance of a nearby person who is a person positioned near a target person and that is performed with respect to the target person; and generate control information that causes notification about the specified notification situation to be performed with respect to the nearby person.

## Description

### BACKGROUND OF THE INVENTION

### (i) Field of the Invention

The present invention relates to an information processing system and a program.

### (ii) Description of Related Art

Disclosed in JP2023-106649Ais a process of performing determination on an utterance of a first user based on sensing information of a sensor device that senses at least one of the first user or a second user and controlling information output to the first user based on the result of the determination on the utterance of the first user.

### SUMMARY OF THE INVENTION

In a case where notification related to an utterance of a nearby person positioned near a target person is performed with respect to the target person, the target person can know the content of the utterance of the nearby person or the like.

Here, for example, in a case where the notification is performed with respect to the target person through a device that only the target person can refer to, the nearby person cannot know the situation of the notification. In this case, a situation where the nearby person makes a new utterance may occur in a situation where the notification with respect to the target person has not been ended.

In addition, for example, a malfunction or the like of the device that the target person refers to may occur. In this case, a situation where the nearby person makes an utterance may occur in a situation where notification with respect to the target person cannot be performed.

An object of the present invention is to enable a nearby person positioned near a target person to be aware of the situation of notification that is related to an utterance of the nearby person and that is performed with respect to the target person.

According to a first aspect of the present disclosure, there is provided an information processing system including a processor configured to specify a notification situation, which is a situation of notification that is related to an utterance of a nearby person who is a person positioned near a target person and that is performed with respect to the target person and generate control information that causes notification about the specified notification situation to be performed with respect to the nearby person.

According to a second aspect of the present disclosure, in the information processing system according to the first aspect, the processor may be configured to specify, as the notification situation, progress of the notification performed with respect to the target person and generate, as the control information, control information that causes notification about the progress to be performed with respect to the nearby person.

According to a third aspect of the present disclosure, in the information processing system according to the second aspect, the processor may be configured to: specify, as the progress, progress of a displaying process of utterance content which is content of the utterance of the nearby person, the displaying process being a displaying process in a target person reference device which is a device that the target person refers to; and generate, as the control information, control information that causes notification about the progress of the displaying process in the target person reference device to be performed with respect to the nearby person.

According to a fourth aspect of the present disclosure, in the information processing system according to the third aspect, the processor may be configured to generate, as the control information, control information that causes notification about an end of the displaying process in the target person reference device to be performed with respect to the nearby person.

According to a fifth aspect of the present disclosure, in the information processing system according to any one of the first to fourth aspects, the processor may be configured to generate, as the control information, control information that causes output of a nearby person reference device, which is a device that the nearby person refers to, to be changed in accordance with the notification situation.

According to a sixth aspect of the present disclosure, in the information processing system according to the fifth aspect, the processor may be configured to generate, as the control information, control information that causes the output of the nearby person reference device to be changed as the notification performed with respect to the target person ends.

According to a seventh aspect of the present disclosure, in the information processing system according to the sixth aspect, the processor may be configured to generate, as the control information, control information that causes brightness of at least a part of the nearby person reference device to be changed as the notification performed with respect to the target person ends.

According to an eighth aspect of the present disclosure, in the information processing system according to the fifth or sixth aspect, the target person may be notified of utterance content which is content of the utterance of the nearby person, a notification process regarding the utterance content may be performed with respect to the target person, and the processor may be configured to further generate control information that causes the nearby person reference device to output information indicating that making an utterance is possible as the notification process ends.

According to a ninth aspect of the present disclosure, in the information processing system according to any one of the first to eighth aspects, the processor may be configured to generate, as the control information, control information that causes a change in sound output from a sound source in accordance with the situation of the notification performed with respect to the target person.

According to a tenth aspect of the present disclosure, in the information processing system according to the ninth aspect, the processor may be configured to generate, as the control information, control information that causes the sound source not to output a sound as the notification performed with respect to the target person ends or to generate, as the control information, control information that causes the sound source to output a sound as the notification ends.

According to an eleventh aspect of the present disclosure, in the information processing system according to the ninth aspect, the target person may be notified of utterance content which is content of the utterance of the nearby person, a notification process regarding the utterance content may be performed with respect to the target person, and the processor may be configured to further generate control information that causes the sound source to output a sound corresponding to information indicating that making an utterance is possible as the notification process ends.

According to a twelfth aspect of the present disclosure, in the information processing system according to any one of the first to eleventh aspects, the processor may be configured to generate, as the control information, control information that causes notification about the notification situation to be performed with respect to each nearby person through an individual device of each nearby person.

According to a thirteenth aspect of the present disclosure, in the information processing system according to the twelfth aspect, the processor may be configured to generate, as the control information, control information that causes a change in state of vibration of the individual device in accordance with the situation of the notification performed with respect to the target person.

According to a fourteenth aspect of the present disclosure, in the information processing system according to the twelfth or thirteenth aspect, the processor may be configured to generate, as the control information, control information that causes a change in content displayed on the individual device in accordance with the situation of the notification performed with respect to the target person.

According to a fifteenth aspect of the present disclosure, in the information processing system according to the fourteenth aspect, the target person may be notified of utterance content which is content of the utterance of the nearby person, a notification process regarding the utterance content may be performed with respect to the target person, and the processor may be configured to further generate control information that causes the individual device to display information indicating that making an utterance is possible as the notification process ends.

According to a sixteenth aspect of the present disclosure, in the information processing system according to any one of the first to fifteenth aspects, the target person may be notified of utterance content which is content of an utterance of an utterer who is one of nearby persons and has made the utterance and the processor may be configured to specify, as the notification situation, a notification situation regarding the utterance content of the utterer for each utterer and further generate control information that makes a way in which the nearby persons are notified of the notification situation specified for each utterer different for each utterer.

According to a seventeenth aspect of the present disclosure, in the information processing system according to any one of the first to sixteenth aspects, notification related to an utterance of a registered nearby person who is one of nearby persons and is registered in advance may be performed with respect to the target person, notification related to an utterance of a non-registered person who is a person other than the registered nearby person may not be performed with respect to the target person, and the processor may be configured to specify, as the notification situation, a notification situation which is a situation of the notification that is related to the utterance of the registered nearby person and that is performed with respect to the target person and generate, as the control information, control information that causes notification about the notification situation regarding the notification related to the utterance of the registered nearby person to be performed with respect to the nearby persons.

According to an eighteenth aspect of the present disclosure, there is provided a program causing a computer to realize a specifying function of specifying a notification situation, which is a situation of notification that is related to an utterance of a nearby person who is a person positioned near a target person and that is performed with respect to the target person and a generating function of generating control information that causes notification about the specified notification situation to be performed with respect to the nearby person.

According to the first aspect of the present disclosure, it is possible to enable the nearby person positioned near the target person to be aware of the situation of the notification that is related to the utterance of the nearby person and that is performed with respect to the target person.

According to the second aspect of the present disclosure, it is possible to notify the nearby person of the progress of the notification performed with respect to the target person.

According to the third aspect of the present disclosure, it is possible to notify the nearby person of the progress of the displaying process in the target person reference device that the target person refers to.

According to the fourth aspect of the present disclosure, it is possible to notify the nearby person of the end of the displaying process in the target person reference device.

According to the fifth aspect of the present disclosure, it is possible to change the output of the nearby person reference device, which is the device the nearby person refers to, in accordance with the notification situation.

According to the sixth aspect of the present disclosure, it is possible to change the output of the nearby person reference device as the notification performed with respect to the target person ends.

According to the seventh aspect of the present disclosure, it is possible to notify the nearby person that the notification performed with respect to the target person has ended by using a change in the brightness of at least a part of the nearby person reference device.

According to the eighth aspect of the present disclosure, it is possible to notify the nearby person that making an utterance is possible.

According to the ninth aspect of the present disclosure, it is possible to notify the nearby person of the situation of the notification performed with respect to the target person by using the sound.

According to the tenth aspect of the present disclosure, it is possible to notify the nearby person that the notification performed with respect to the target person has ended by using the sound.

According to the eleventh aspect of the present disclosure, it is possible to notify the nearby person that making an utterance is possible.

According to the twelfth aspect of the present disclosure, it is possible to individually notify each nearby person of the situation of the notification performed with respect to the target person.

According to the thirteenth aspect of the present disclosure, it is possible to notify the nearby person of the situation of the notification performed with respect to the target person by using the vibration of the individual device.

According to the fourteenth aspect of the present disclosure, it is possible to notify the nearby person of the situation of the notification performed with respect to the target person through the content displayed on the individual device.

According to the fifteenth aspect of the present disclosure, it is possible to notify the nearby person that making an utterance is possible through the information displayed on the individual device.

According to the sixteenth aspect of the present disclosure, it is possible to notify the nearby persons of which nearby person's utterance the notification performed with respect to the target person relates to.

According to the seventeenth aspect of the present disclosure, it is possible to notify the nearby persons of the situation of the notification related to the utterance of the nearby person registered in advance.

According to the eighteenth aspect of the present disclosure, it is possible to enable the nearby person positioned near the target person to be aware of the situation of the notification that is related to the utterance of the nearby person and that is performed with respect to the target person.

### BRIEF DESCRIPTION OF THE DRAWINGS

Exemplary embodiment(s) of the present invention will be described in detail based on the following figures, wherein:
Fig. 1 is a diagram showing an overall configuration of a notification system;
Fig. 2 is a diagram showing a configuration of a management server;
Fig. 3 is a diagram showing a hardware configuration of a device;
Fig. 4 is a diagram showing a database stored in an information storage unit of the management server;
Parts (A) to (C) of Fig. 5 are diagrams showing an example of a process executed in the notification system;
Parts (A) to (H) of Fig. 6 are diagrams showing a series of events in a displaying process;
Parts (A) to (C) of Fig. 7 are diagrams showing another processing example;
Parts (A) to (D) of Fig. 8 are diagrams showing a processing example in the case of use of a sound source; and
Parts (A) to (C) of Fig. 9 are diagrams showing a processing example in a case of outputting utterance allowance information.

### DETAILED DESCRIPTION OF THE INVENTION

An exemplary embodiment of the present invention will be described below with reference to the accompanying drawings.

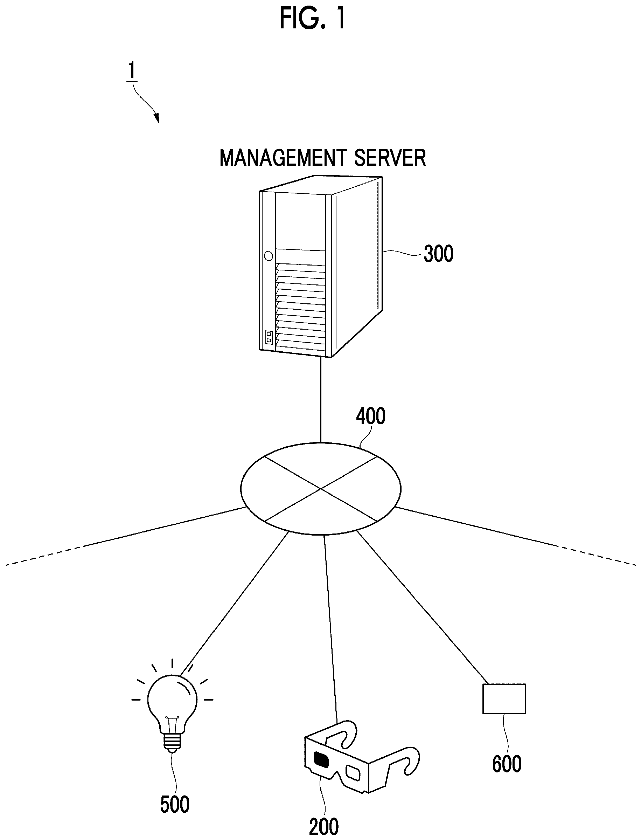

Fig. 1 is a diagram showing an overall configuration of a notification system 1 according to the present exemplary embodiment.

The notification system 1 is provided with a management server 300. Furthermore, the notification system 1 is provided with devices 200 each of which is to be mounted on a target person, which will be described later.

Although only one device 200 is shown in Fig. 1, a plurality of devices 200 are provided in accordance with the number of target persons. The devices 200 are eyeglass-type devices 200. Each device 200 is mounted on the head of a target person. The target person visually recognizes the vicinity of the target person through the device 200.

In addition, an individual microphone 600 to be mounted on each nearby person (which will be described later) is provided. The individual microphone 600 acquires a voice of the nearby person and generates voice information.

The individual microphone 600 is provided for each nearby person. In a case where there are a plurality of nearby persons, a plurality of individual microphones 600 are provided.

Furthermore, a light emitting device 500, which is an example of a nearby person reference device is provided.

For example, the light emitting device 500 is provided with a light source such as an LED and a CPU which is an example of a processor that controls the output of the light source.

A nearby person is notified of, via the light emitting device 500, the situation of notification that is related to an utterance and that is performed with respect to a target person.

As will be described later, such notification with respect to a nearby person may be performed via a device other than the light emitting device 500, such as a sound source.

The devices 200 are connected to the management server 300 through a communication line 400, such as the Internet. In addition, the individual microphone 600 and the light emitting device 500 are also connected to the management server 300 through the communication line 400.

### [Configuration of Management Server]

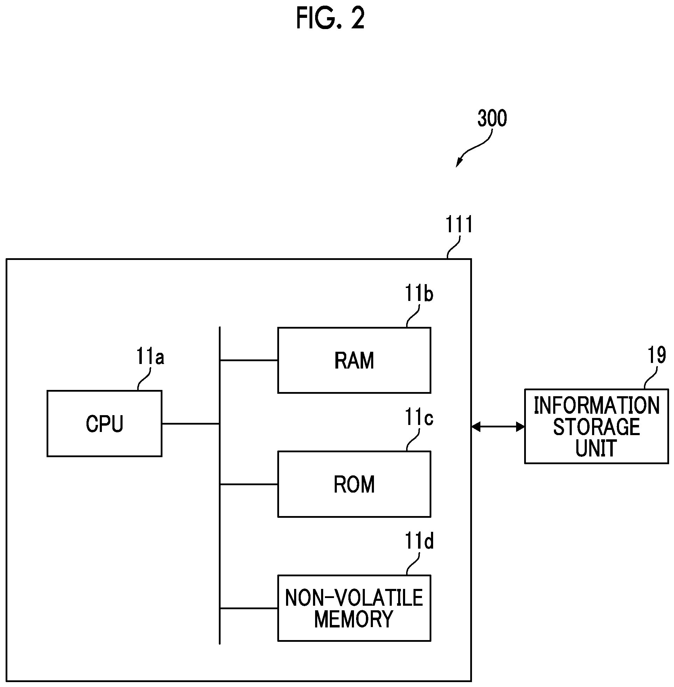

Fig. 2 is a diagram showing a configuration of the management server 300. The management server 300 is realized by a computer.

The management server 300 functioning as an information processing system includes an arithmetic processing unit 111 that executes a digital arithmetic process according to a program. Furthermore, the management server 300 includes an information storage unit 19 that stores information.

The information storage unit 19 is realized by an existing information storage device. Specifically, the information storage unit 19 is realized by, for example, a hard disk drive (HDD). In addition, the information storage unit 19 is realized by, for example, a semiconductor memory.

The arithmetic processing unit 111 is provided with a CPU 11a which is an example of a processor.

In addition, the arithmetic processing unit 111 is provided with a RAM 11b that is used as a work memory or the like of the CPU 11a. In addition, the arithmetic processing unit 111 is provided with a ROM 11c in which a program and the like executed by the CPU 11a are stored.

In addition, the arithmetic processing unit 111 is provided with a non-volatile memory 11d that can hold data even in a case where power supply is interrupted.

The non-volatile memory 11d is composed of, for example, an SRAM or a flash memory that is backed up by a battery. The information storage unit 19 stores various types of information such as a program executed by the CPU 11a.

The CPU 11a provided in the arithmetic processing unit 111 reads a program stored in the ROM 11c or the information storage unit 19. Accordingly, various types of processing to be performed by the management server 300 are executed by the management server 300.

The program to be executed by the CPU 11a can be provided to the management server 300 in a state of being stored in a recording medium. This recording medium is a computer-readable recording medium.

Examples of the recording medium include a magnetic recording medium, such as a magnetic tape or a magnetic disk, and an optical recording medium, such as an optical disk. In addition, examples of the recording medium also include an optical magnetic recording medium and a semiconductor memory.

In addition, the program to be executed by the CPU 11a may be provided to the management server 300 by means of a communication unit. Examples of the communication unit include a communication unit that uses an Internet line.

### [Configuration of Device]

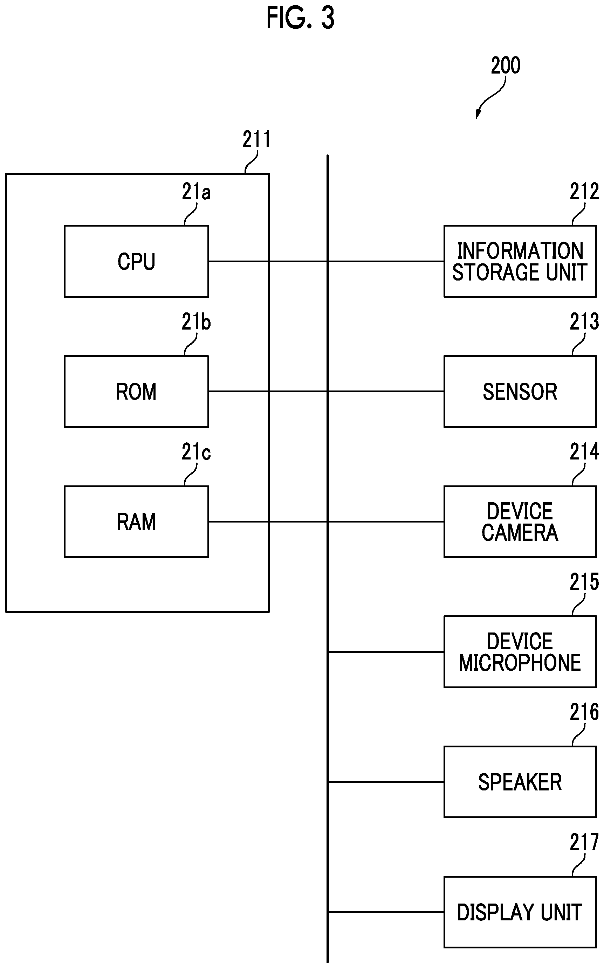

Fig. 3 is a diagram showing a hardware configuration of the device 200.

The device 200 includes an arithmetic processing unit 211, an information storage unit 212, a sensor 213, and a device camera 214. In addition, the device 200 further includes a device microphone 215, a speaker 216, and a display unit 217.

The arithmetic processing unit 211 is provided with a CPU 21a which is an example of a processor.

In addition, the arithmetic processing unit 211 is provided with a RAM 21c that is used as a work memory or the like of the CPU 21a. In addition, the arithmetic processing unit 211 is provided with a ROM 21b in which a program and the like executed by the CPU 21a are stored.

The information storage unit 212 is realized by an existing information storage device, such as a semiconductor memory.

Examples of the sensor 213 include a GPS sensor and an azimuth sensor. It is possible to specify the current position of the device 200 or the orientation of the device 200 by referring to output from the sensor 213.

The device camera 214 is a camera that images the vicinity of the device 200.

The device camera 214 faces a front side ahead of a target person in a state where the device 200 is mounted on the target person and images the front side. In other words, the device camera 214 faces a side that the target person faces and images the side ahead of the target person.

The device microphone 215 acquires a voice of the target person and generates voice information.

The speaker 216 outputs sound or a voice and performs a notification process for the target person on which the device 200 is mounted.

The display unit 217 is a so-called display and displays various kinds of information. The display unit 217 is disposed in front of the eyes of the target person in a state where the device 200 is mounted on the target person.

A video obtained by the device camera 214 is displayed on the display unit 217. In a state where the device 200 is mounted on the target person, a video showing the state of a space ahead of the target person is displayed on the display unit 217.

In the present exemplary embodiment, the target person visually recognizes the space ahead of the target person by referring to a video displayed on the display unit 217.

The device 200 can be regarded as a target person reference device that the target person refers to.

In addition, there is also a light-transmissive type device 200.

In this case, as the display unit 217, the display unit 217 that is transparent and through which the target person can visually recognize a space behind the display unit 217 is installed.

The target person visually recognizes the space behind the display unit 217 through the display unit 217. In other words, the target person visually recognizes a space ahead of the target person through the display unit 217.

In the case of the light-transmissive type device 200, an image is displayed on the display unit 217. A user visually recognizes both a real space behind the display unit 217 and the image displayed on the display unit 217.

The program to be executed by the CPU 21a can be provided to the device 200 in a state of being stored in a recording medium. This recording medium is a computer-readable recording medium.

As in the above-described embodiment, examples of the recording medium include a magnetic recording medium, such as a magnetic tape or a magnetic disk, and an optical recording medium, such as an optical disk. In addition, examples of the recording medium also include an optical magnetic recording medium and a semiconductor memory.

In addition, the program to be executed by the CPU 21a may be provided to the device 200 by means of a communication unit. Examples of the communication unit include a communication unit that uses an Internet line.

Note that the device 200 is not limited to an eyeglass-type device, and examples of the device 200 include a smartphone and a tablet terminal. All of the eyeglass-type device, the smartphone, the tablet terminal, and the like are devices that can be carried by the target person.

Each of the smartphone and the tablet terminal is also provided with a display unit and a device camera. In this case as well, the target person can visually recognize the front space ahead of the target person by referring to a video that is captured by the device camera and that is displayed on the display unit.

In this case, the "target person" refers to the display unit provided in the smartphone or the tablet terminal disposed ahead of the target person. In this manner, the target person can visually recognize a space that is positioned ahead of the target person and that is positioned behind the smartphone or the tablet terminal.

In the present exemplary embodiment, a notification process in which the target person is notified of utterance content, which will be described later, is performed via the eyeglass-type device 200. However, the present invention is not limited thereto, and such a notification process can be performed even in a case where a smartphone or a tablet terminal is used.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### [Description about Database]

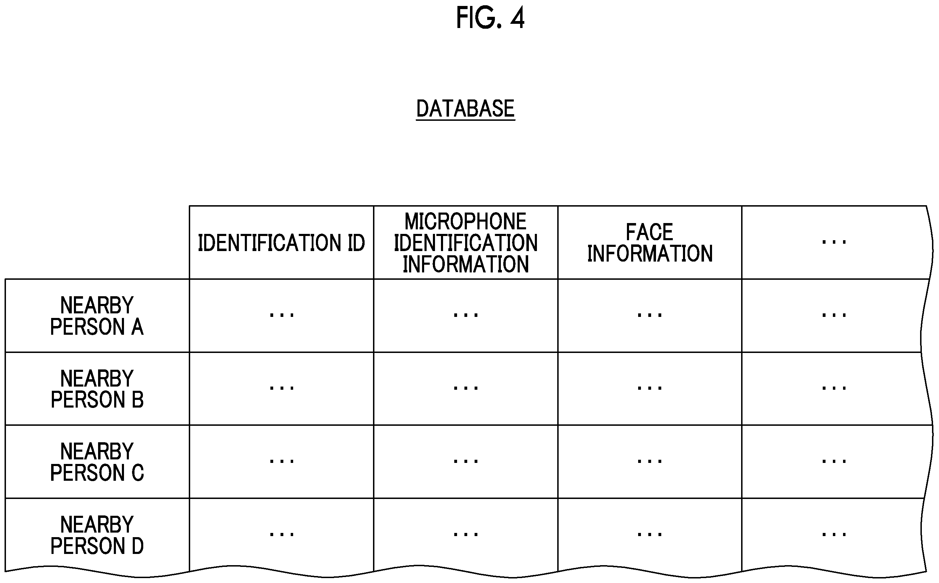

Fig. 4 is a diagram showing a database stored in the information storage unit 19 of the management server 300 (refer to Fig. 2).

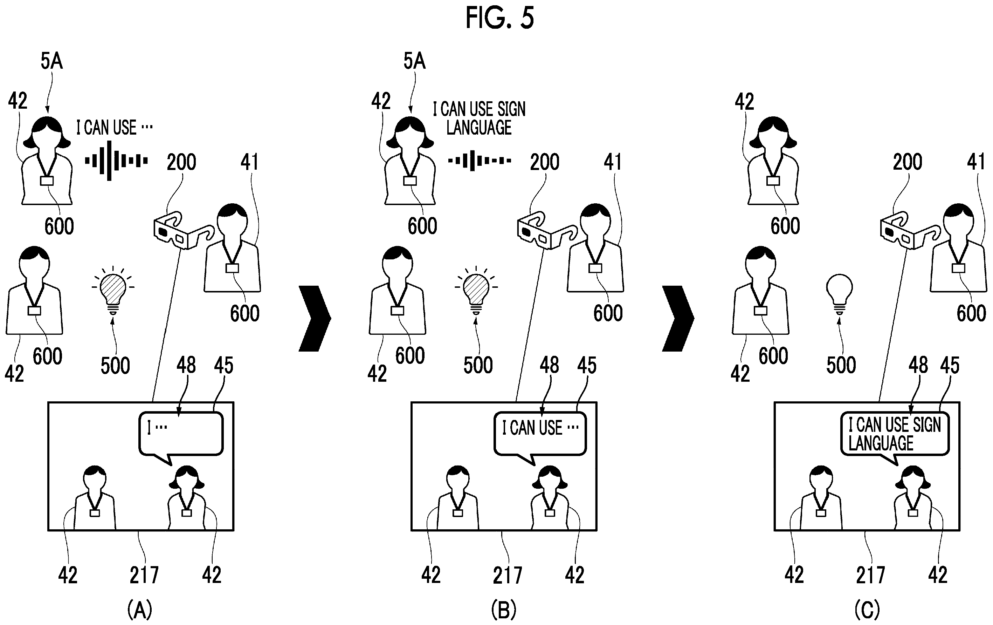

As shown in Fig. 4, in the database, information about a nearby person 42 (refer to parts (A) to (C) of Fig. 5) is registered for each nearby person 42.

In the database, an identification ID, which is information used to identify each of the nearby persons 42, is stored for each nearby person 42.

In addition, in the database, microphone identification information is stored for each nearby person 42. The microphone identification information is identification information for the individual microphone 600 (refer to Fig. 1) carried by each nearby person 42.

Furthermore, in the database, face information and the like of the nearby person 42 is registered for each nearby person 42.

In the present exemplary embodiment, the face of the nearby person 42 is imaged in advance. Then, the face information, which is information about the face of the nearby person 42, is registered in the database.

Examples of the face information include an image of the face of the nearby person 42. In addition, examples of the face information also include information about the feature amount of the face of the nearby person 42. The information about the feature amount is obtained by analyzing the image of the face of the nearby person 42.

A video acquired by the device camera 214 (refer to Fig. 3) and voice information obtained by the individual microphone 600 (refer to Fig. 1) are transmitted to the management server 300 (refer to Fig. 1).

The CPU 11a (refer to Fig. 2) of the management server 300 acquires the video or the voice information. The CPU 11a acquires the video or the voice information as information of the nearby person 42.

The CPU 11a specifies the nearby person 42 shown in the video based on the video acquired by the device camera 214.

The CPU 11a acquires an image of the face of each nearby person 42 shown in the video. Then, the CPU 11a specifies the nearby person 42 based on the image of the face and the face information stored in the database.

In addition, the CPU 11a acquires utterance content of the nearby person 42 based on the voice information obtained by the individual microphone 600.

### [Description about Process Executed in Notification System 1]

The parts (A) to (C) of Fig. 5 are diagrams showing an example of a process executed in the notification system 1.

In the part (A) of Fig. 5, a target person 41, for which the target of a notification process of notifying a target of utterance content is performed, is shown. In addition, in the part (A) of Fig. 5, a plurality of nearby persons 42 who are persons positioned near the target person 41 are shown.

In the present exemplary embodiment, as shown in the part (A) of Fig. 5, the device 200 is mounted on the target person 41. Through the device 200, the target person 41 is notified of utterance content, which is the content of the utterance of the nearby person 42.

There may be a case where the target person 41 is a hearing-impaired person. A hearing-impaired person can also specify the utterance content of the nearby person 42 in a case where the hearing-impaired person is notified of utterance content 48.

The part (A) of Fig. 5 shows a situation where the nearby person 42 is displayed on the display unit 217 provided in the device 200. Furthermore, the utterance content 48 of the nearby person 42 is displayed on the display unit 217.

The individual microphone 600 is mounted on each nearby person 42. Voice information of the nearby person 42 is acquired by the individual microphone 600. Note that in the present exemplary embodiment, the individual microphone 600 is also mounted on the target person 41.

The device 200 mounted on the target person 41 is the eyeglass-type device 200.

The device 200 is mounted on the head of the target person 41. The target person 41 visually recognizes the nearby persons 42 positioned near the target person 41 through the device 200. In other words, the target person 41 visually recognizes the nearby persons 42 positioned ahead of the target person 41 through the device 200.

As described above, the device 200 is provided with the device camera 214 (refer to Fig. 3). In addition, the device 200 is provided with the display unit 217 that displays a video obtained by the device camera 214.

The target person 41 visually recognizes the nearby persons 42 by referring to the nearby persons 42 who are imaged by the device camera 214 and are displayed on the display unit 217.

Note that, there may be a case where the device 200 is the above-described light-transmissive type device 200. In this case, the target person 41 visually recognizes the nearby persons 42 positioned behind the display unit 217 through the display unit 217 that is transparent.

In addition, in the present exemplary embodiment, as shown in the part (A) of Fig. 5, the light emitting device 500 is provided. The light emitting device 500 is provided at a position at which the light emitting device 500 can be visually recognized by the nearby person 42. The role of the light emitting device 500 will be described below.

In a case where the CPU 11a of the management server 300 acquires voice information acquired by the individual microphone 600, the CPU 11a specifies the nearby person 42 who has made an utterance.

Microphone identification information is transmitted from the individual microphone 600 together with the voice information.

The CPU 11a acquires the microphone identification information that is transmitted to the management server 300 together with the voice information.

The CPU 11a specifies the nearby person 42 based on the acquired microphone identification information and microphone identification information stored in the database.

Each individual microphone 600 stores microphone identification information for identification of the individual microphone 600. The microphone identification information is transmitted from the individual microphone 600 to the management server 300 together with voice information.

The CPU 11a specifies the nearby person 42 based on the microphone identification information and microphone identification information registered in the database. The CPU 11a specifies the nearby person 42 who has made an utterance which is the source of the voice information acquired by the individual microphone 600.

In the present exemplary embodiment, the nearby person 42 who has made an utterance is specified each time an utterance is made and for each nearby person 42.

The individual microphone 600 is prepared for each nearby person 42.

Voice information of each nearby person 42 is acquired by the individual microphone 600 prepared for each nearby person 42. The voice information obtained by the individual microphone 600 is transmitted to the management server 300 together with microphone identification information as described above.

The CPU 11a specifies the nearby person 42 based on the microphone identification information. Furthermore, the CPU 11a acquires the voice information about the specified nearby person 42.

Furthermore, the CPU 11a acquires the utterance content 48 of the specified nearby person 42 based on the acquired voice information. Note that a known method may be used to acquire the utterance content 48 based on the voice information.

In the case of transmission of voice information from the individual microphone 600 to the management server 300, voice information is selected at the individual microphone 600. At the individual microphone 600, voice information of which the sound pressure exceeds a predetermined threshold value is selected from pieces of voice information acquired by the individual microphone 600.

Then, the selected voice information is transmitted from the individual microphone 600 to the management server 300 together with microphone identification information.

Accordingly, transmission of voice information of another nearby person 42, from which no voice information is supposed to be acquired, to the management server 300 is suppressed.

The "other nearby person 42" refers to another nearby person 42 different from the nearby person 42 with the individual microphone 600 mounted thereon. In other words, the "other nearby person 42" refers to the nearby person 42 on which the individual microphone 600 is not mounted.

In the present exemplary embodiment, the transmission of the voice information of the other nearby person 42 to the management server 300 through the individual microphone 600 is suppressed.

The other nearby person 42 is separated from the nearby person 42 on which the individual microphone 600 is mounted. In this case, the sound pressure of a voice of the other nearby person 42 that is acquired by the individual microphone 600 is low. In this case, the voice information of the other nearby person 42 is not transmitted to the management server 300.

In the present exemplary embodiment, voice information of which the sound pressure exceeds the predetermined threshold value is selected. In addition, the selected voice information is transmitted to the management server 300. In this case, the voice information of the other nearby person 42 is not transmitted to the management server 300.

The management server 300 may select voice information of which the sound pressure exceeds the predetermined threshold value.

In this case, the management server 300 selects the voice information from pieces of voice information transmitted from the individual microphone 600. The management server 300 selects the voice information of which the sound pressure exceeds the predetermined threshold value from the pieces of voice information transmitted to the management server 300.

In this case, the management server 300 acquires the selected voice information as voice information of the nearby person 42 on which the individual microphone 600 is mounted.

Alternatively, the CPU 11a may acquire, as voice information of the nearby person 42, voice information obtained by a terminal device. Examples of the terminal device include a smartphone or a tablet terminal of each nearby person 42.

The smartphone or the tablet terminal is provided with a microphone.

The CPU 11a may acquire voice information obtained by the microphone of the terminal device as voice information of the nearby person 42. In this case, the CPU 11a acquires, as voice information of the nearby person 42, the voice information that is obtained by the microphone and that is transmitted to the management server 300.

Alternatively, a common microphone may also be provided. In this case, the CPU 11a acquires voice information acquired by the common microphone. Then, the CPU 11a acquires voice information of each nearby person 42 based on the voice information.

In a case where a common microphone is used, voice feature information is registered in the database in advance. Specifically, voice feature information of each nearby person 42 is registered in the database in advance for each nearby person 42.

In this case, the CPU 11a acquires the voice information of each nearby person 42 based on the feature information registered in the database.

Furthermore, the CPU 11a of the management server 300 specifies each nearby person 42 displayed on the display unit 217 (refer to the part (A) of Fig. 5). The CPU 11a acquires voice information of each nearby person 42 and specifies each nearby person 42 displayed on the display unit 217.

The CPU 11a specifies each nearby person 42 based on a video acquired by the device camera 214 (refer to Fig. 3).

Specifically, the CPU 11a specifies each nearby person 42 based on a video and face information of the nearby person 42.

The CPU 11a acquires a video that is acquired by the device camera 214 and that shows the nearby person 42. Then, the CPU 11a specifies each nearby person 42 based on a video of the nearby person 42 in the video and the face information. The CPU 11a specifies each nearby person 42 based on the video of the nearby person 42 and the face information registered in the database.

Thereafter, the CPU 11a generates control information that causes the utterance content 48 to be associated with the nearby person 42 who has made an utterance. The CPU 11a generates the control information that causes the utterance content 48 to be associated with the nearby person 42 displayed on the display unit 217.

The CPU 11a specifies the nearby person 42 who has made the utterance and the utterance content 48 of the nearby person 42 as described above. In addition, the CPU 11a specifies each nearby person 42 displayed on the display unit 217 of the device 200.

Then, the CPU 11a generates control information that causes the utterance content 48 to be associated with the nearby person 42. The CPU 11a generates the control information that causes the utterance content 48 to be associated with the nearby person 42 displayed on the display unit 217.

In the case of generation of the control information, the CPU 11a generates the control information that includes position information, which is information about a position at which the utterance content 48 is to be displayed.

The CPU 11a decides the position of the nearby person 42 displayed on the display unit 217 as the position at which the utterance content 48 is to be displayed. More specifically, the CPU 11a determines, as the position at which the utterance content 48 is to be displayed, a position near the head of the nearby person 42.

Then, the CPU 11a generates the control information that includes the position information, which is information about the position at which the utterance content 48 is to be displayed. In addition, regarding the CPU 11a, the control information also includes the specified utterance content 48.

In addition, in the present exemplary embodiment, the control information including the position information and the utterance content 48 is transmitted from the management server 300 to the device 200.

Then, the CPU 21a (refer to Fig. 3) of the device 200 performs display control of the display unit 217 based on the control information. Accordingly, the utterance content 48 is displayed on the display unit 217 at a position specified by the position information.

Accordingly, for example, the display unit 217 of the device 200 displays content as shown in the part (A) of Fig. 5. In a case where the content is displayed, the utterance content 48 is displayed in a state where the utterance content 48 is associated with the nearby person 42 who has made the utterance.

In the present exemplary embodiment, as described above, the utterance content 48 of the nearby person 42 is displayed on the display unit 217 of the device 200. In the present exemplary embodiment, in a case where the nearby person 42 makes an utterance, the utterance content 48 of the nearby person 42 is displayed on the display unit 217 of the device 200.

In the present exemplary embodiment, a displayed image 45, which is an image representing a speech balloon, is displayed in a case where the utterance content 48 is displayed. The utterance content 48 is displayed inside the displayed image 45.

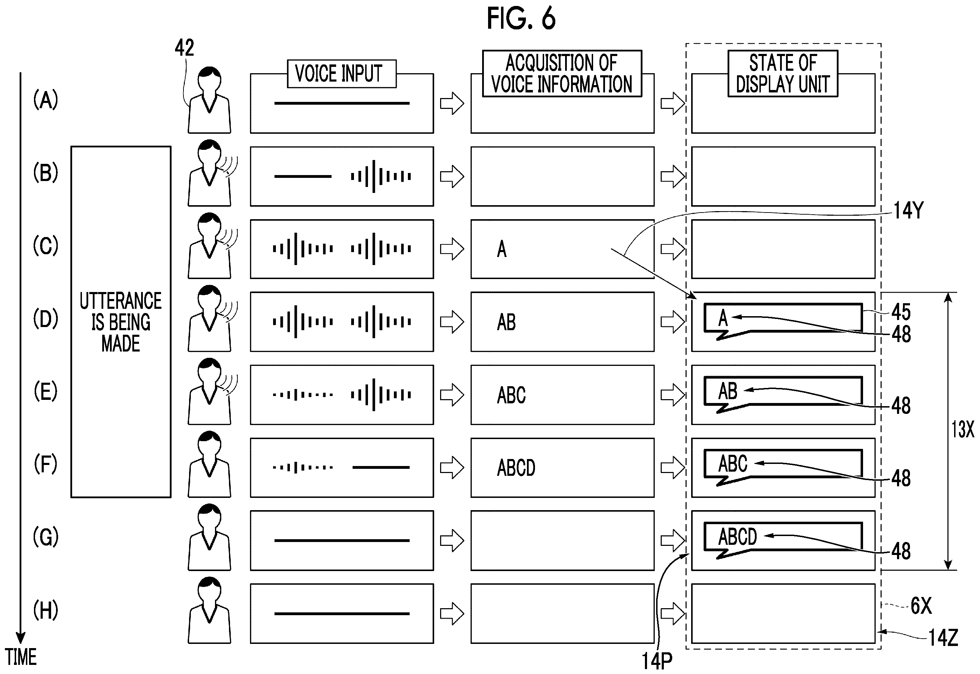

Parts (A) to (H) of Fig. 6 are diagrams showing a series of events in a displaying process.

The part (A) of Fig. 6 shows a situation where the nearby person 42 does not make an utterance, and in this case, the CPU 11a does not acquire voice information. In addition, in this case, the CPU 11a does not generate control information that causes the utterance content 48 to be displayed.

In this case, the utterance content 48 is not displayed on the display unit 217 of the device 200.

The parts (B) to (H) of Fig. 6 show situations after the start of utterance of the nearby person 42.

In this case, the CPU 11a acquires voice information. The CPU 11a acquires the utterance content 48 based on the voice information. The CPU 11a generates control information that causes the utterance content 48 to be displayed.

Accordingly, as represented by a reference numeral "13X", the utterance content 48 is displayed on the display unit 217 of the device 200. More specifically, the utterance content 48 is displayed inside the displayed image 45 displayed on the display unit 217 of the device 200.

As described above, the utterance content 48 is displayed in a state of being associated with the nearby person 42 who has made the utterance.

Accordingly, the target person 41 is notified of the utterance content 48 of the nearby person 42. In the present exemplary embodiment, a notification process of notifying the target person 41 of the utterance content 48 is performed in this manner.

There is a time interval between a time at which the voice information is acquired and a time at which the utterance content 48 is displayed.

The time at which the voice information is acquired means a time at which the CPU 11a acquires the voice information.

The time at which the utterance content 48 is displayed means a time at which the utterance content 48 starts to be displayed on the display unit 217.

In the present exemplary embodiment, as represented by an arrow 14Y, the utterance content 48 starts to be displayed later than the acquisition of the voice information, which is performed by the CPU 11a.

The part (F) of Fig. 6 shows a time at which the utterance of the nearby person 42 ends.

In this case, as represented by a reference numeral "14P", a displaying process of the utterance content 48 ends later than the time shown in the part (F) of Fig. 6. In addition, in this case, as represented by a reference numeral "14Z", the utterance content 48 disappears later than the time shown in the part (F) of Fig. 6.

Even after the utterance of the nearby person 42 ends, the displaying process is continuously performed. Even after the utterance of the nearby person 42 ends, the displaying process is continuously performed until the last part of the utterance content 48 is displayed.

In a case where the last part of the utterance content 48 is displayed on the display unit 217, the displaying process on the display unit 217 ends. Accordingly, the display unit 217 enters a state represented by the reference numeral "14P". Thereafter, as represented by a reference numeral "14Z", the utterance content 48 disappears.

### [Notification Process with respect to Nearby Person]

The CPU 11a specifies a notification situation, which is the situation of notification performed with respect to the target person 41. As described above, the target person 41 is notified of the utterance content 48 of the nearby person 42. The CPU 11a specifies the notification situation, which is the situation of this notification performed with respect to the target person 41.

The CPU 11a specifies the notification situation, which is the situation of a notification process represented by a reference numeral "6X" in Fig. 6, each time a predetermined time elapses.

The CPU 11a specifies, based on information that is transmitted from the device 200 each time the predetermined time elapses, the notification situation each time the predetermined time elapses.

Information about the situation of the above-described notification performed with respect to the target person 41 is transmitted from the device 200 to the management server 300. This information is transmitted from the device 200 to the management server 300 each time the predetermined time elapses.

The CPU 11a specifies the notification situation based on the information transmitted to the management server 300. The CPU 11a specifies, based on this information, the notification situation, which is the situation of the notification performed with respect to the target person 41.

As described above, notification related to an utterance of the nearby person 42 is performed with respect to the target person 41. Specifically, notification about the utterance content 48 of the nearby person 42 is performed with respect to the target person 41.

The CPU 11a specifies the situation of the notification about the utterance content 48. The CPU 11a specifies, as the notification situation, the progress of the notification about the utterance content 48 that is performed with respect to the target person 41.

More specifically, the CPU 11a specifies the progress of a displaying process in the device 200 as the progress of the notification.

The CPU 11a specifies the progress of a displaying process of the utterance content 48 of the nearby person 42, which is a displaying process in the device 200.

Then, the CPU 11a generates control information that causes notification about the specified progress to be performed with respect to the nearby person 42.

The control information is output to the light emitting device 500 which is an example of the nearby person reference device.

Accordingly, a CPU (not shown) provided in the light emitting device 500 controls the light emitting device 500 based on the control information.

The CPU 11a of the management server 300 generates, as the control information, for example, control information that causes a change in output in the nearby person reference device. The nearby person reference device is a device that the nearby person 42 refers to, such as the light emitting device 500.

The CPU 11a generates the control information that causes a change in output in the nearby person reference device in accordance with the situation of notification in the device 200.

The CPU 11a generates the control information that causes a change in output in the nearby person reference device as the notification in the device 200 ends.

More specifically, the CPU 11a generates control information that causes a change in brightness of at least a part of the nearby person reference device. The CPU 11a generates the control information as notification performed with respect to the target person 41 ends.

The CPU 11a generates control information that causes the nearby person 42 to be notified that a displaying process in the device 200 has ended.

In addition, in the present exemplary embodiment, the generated control information is transmitted to, for example, the light emitting device 500 (refer to the part (A) of Fig. 5). Then, based on the control information, the light emitting device 500, which is an example of the nearby person reference device, is controlled to be turned on or off.

Accordingly, the nearby person 42 recognizes the situation of notification in the device 200 by referring to the light emitting device 500.

The parts (A) to (C) in Fig. 5 show a processing example in the case of a change in output of the light emitting device 500, which is an example of the nearby person reference device.

The part (A) of Fig. 5 shows a situation where utterance of the nearby person 42 who is one of the plurality of nearby persons 42 and is represented by a reference numeral "5A" is started. In addition, the part (A) of Fig. 5 shows a situation where a displaying process of the utterance content 48 is started in the display unit 217.

In this case, the light emitting device 500 is turned on. In a case where the displaying process of the utterance content 48 is started in the display unit 217, the light emitting device 500 is turned on.

Note that although a configuration in which a major part of the light emitting device 500 is turned on is adopted in the present exemplary embodiment, a configuration in which the light emitting device 500 partially emits light may also be adopted.

In a situation as shown in the part (A) of Fig. 5, the CPU 11a generates control information that causes the light emitting device 500 to be turned on. In a situation where a displaying process is being performed in the device 200, the CPU 11a generates the control information that causes the light emitting device 500 to be turned on.

Accordingly, as shown in the part (A) of Fig. 5, the light emitting device 500 is turned on.

The part (B) of Fig. 5 shows a state immediately before the end of the utterance of the nearby person 42 represented by the reference numeral "5A". Even at a time as shown in the part (B) of Fig. 5, the displaying process continues is being performed in the display unit 217 of the device 200.

In this case as well, the CPU 11a generates the control information that causes the light emitting device 500 to be turned on, as with the above description.

Accordingly, as shown in the part (B) of Fig. 5, the light emitting device 500 remains on.

The part (C) of Fig. 5 shows a situation where the displaying process in the display unit 217 of the device 200 has ended. In the situation as shown in the part (C) of Fig. 5, the utterance of the nearby person 42 has also ended.

In this case, the CPU 11a generates control information that causes the light emitting device 500 to be turned off. In a case where the CPU 11a specifies that the displaying process in the device 200 has ended, the CPU 11a generates the control information.

Note that the expression "the displaying process has ended" means a state where the last part of the acquired utterance content 48 has been displayed.

In a case where the control information that causes the light emitting device 500 to be turned off is generated, the light emitting device 500 is turned off.

In this case, each nearby person 42 recognizes that the displaying process of the utterance content 48 in the device 200 has ended. In this case, each nearby person 42 recognizes that the nearby person 42 can start to make an utterance.

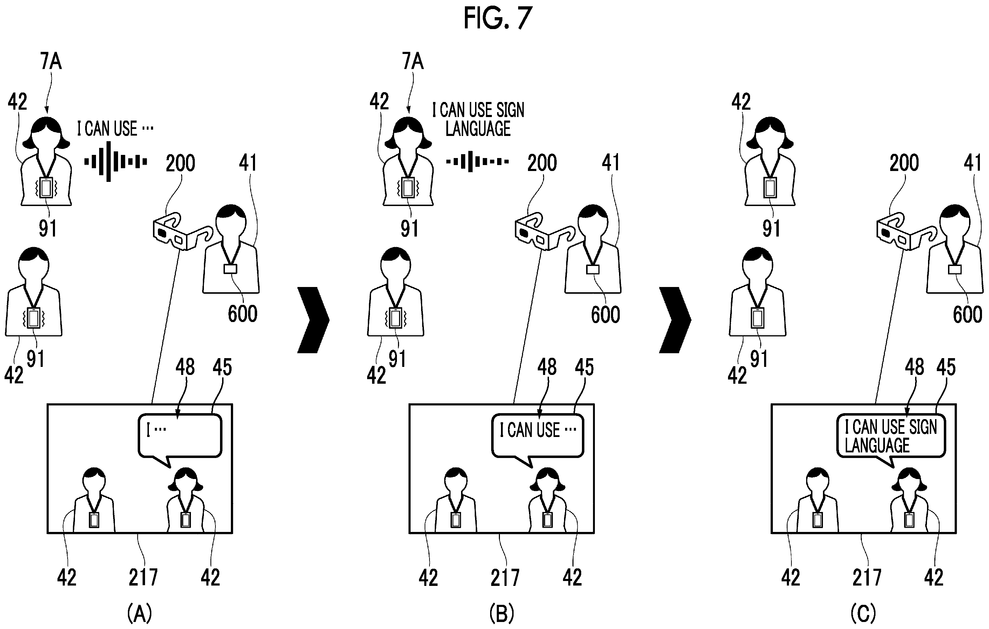

The parts (A) to (C) of Fig. 7 are diagrams showing another processing example.

In this processing example, a processing example in which the output of an individual device 91 is changed in accordance with the situation of the above-described notification performed with respect to the target person 41 is shown.

The "individual device 91" refers to a device of each nearby person 42.

The CPU 11a generates the control information that causes a change in output in the individual device 91 in accordance with the situation of the notification performed with respect to the target person 41. In this processing example, the CPU 11a generates control information that causes a change in state of vibration of the individual device 91. The individual device 91 is provided with a vibration source (not shown).

By the vibration of the individual device 91 also, the nearby person 42 is notified of the start or the end of the displaying process of the utterance content 48. Note that in Fig. 7, the voice of each nearby person 42 is acquired by a microphone (not shown) provided at the individual device 91.

Examples of the individual device 91 include a smartphone and a tablet terminal. A vibration source is provided in a smartphone or a tablet terminal in many cases. In addition, the individual device 91 may be a dedicated device for transmission of vibration to the nearby person 42.

In Fig. 7, the individual device 91 is a smartphone.

The part (A) of Fig. 7 shows a situation where utterance of the nearby person 42 who is one of the plurality of nearby persons 42 and is represented by a reference numeral "7A" is started.

In this processing example, in this case, the individual device 91 of each nearby person 42 vibrates.

In the present exemplary embodiment, the vibration of the individual device 91 is started in accordance with the start of a displaying process in the device 200.

In this processing example, first, the CPU 11a specifies that the displaying process in the device 200 has been started. Then, the CPU 11a generates control information that causes the individual device 91 to vibrate in accordance with the result of the specification. Accordingly, the vibration of the individual device 91 is started.

The part (B) of Fig. 7 shows a state immediately before the end of the utterance of the nearby person 42 represented by the reference numeral "7A".

In this case as well, the CPU 11a generates the control information that causes the individual device 91 to vibrate, as with the above description. Accordingly, the individual device 91 continues to vibrate.

The part (C) of Fig. 7 shows a situation where the displaying process in the device 200 has ended.

In this case, the CPU 11a generates control information that causes the individual device 91 to stop to vibrate. Accordingly, the vibration of the individual device 91 is stopped.

In this case as well, each nearby person 42 recognizes that the displaying process in the device 200 has ended.

First, each nearby person 42 recognizes that the vibration of the individual device 91 has been stopped. Accordingly, each nearby person 42 recognizes that the displaying process has ended.

Alternatively, the CPU 11a may generate, as control information, control information that causes a change in sound output from a sound source. In this case, the CPU 11a generates the control information that causes a change in sound in accordance with the situation of notification performed with respect to the target person 41.

More specifically, the CPU 11a generates, for example, control information that causes the sound source to output no sound as the notification ends.

In addition, for example, the CPU 11a generates control information that causes the sound source to output a sound as the notification ends.

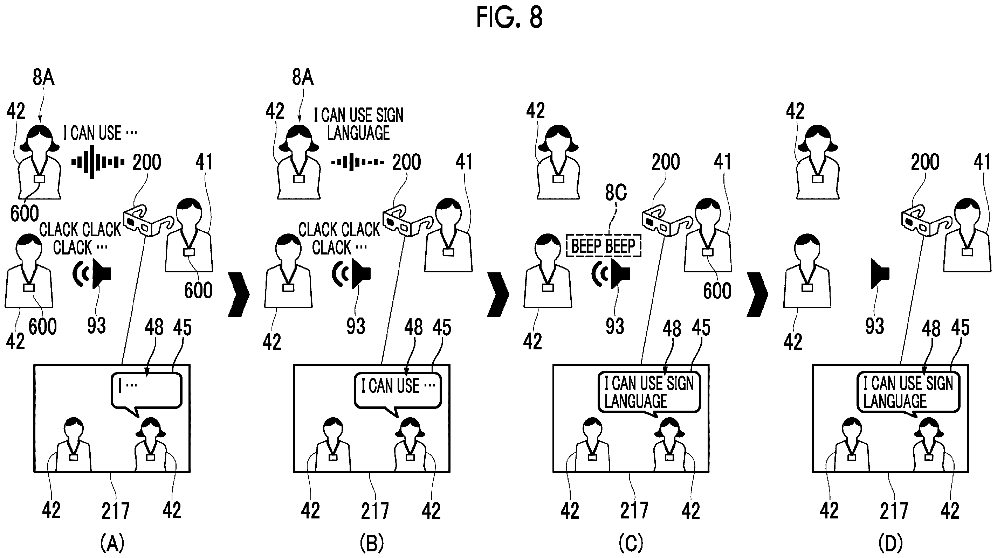

The parts (A) to (D) of Fig. 8 are diagrams showing a processing example in the case of use of a sound source 93.

The part (A) of Fig. 8 shows a situation where utterance of the nearby person 42 who is one of the plurality of nearby persons 42 and is represented by a reference numeral "8A" is started. In addition, the part (A) of Fig. 8 shows a situation where the utterance content 48 starts to be displayed on the display unit 217.

In this case, the CPU 11a generates control information that causes the sound source 93 to start to output a sound. Accordingly, the sound source 93 starts to output the sound.

In this example, a sound indicating that information is being input, such as a typing sound or a clicking sound, is output. In this processing example, in a case where a displaying process in the device 200 is started, the sound is output from the sound source 93.

The CPU 11a generates control information that causes the sound source 93 to output a predetermined specific sound. Accordingly, a predetermined specific sound, such as a typing sound and a clicking sound as described above, is output from the sound source 93.

In the present exemplary embodiment, the sound source 93 starts to output the sound as the displaying process in the device 200 is started.

The part (B) of Fig. 8 shows a state immediately before the end of the utterance of the nearby person 42 represented by the reference numeral "8A".

In this case as well, the CPU 11a generates control information that causes the sound source 93 to output the predetermined specific sound. Accordingly, the sound source 93 continues to output the sound.

The part (C) of Fig. 8 shows a situation where the displaying process in the device 200 has ended.

In this case, the CPU 11a generates control information that causes the sound source 93 to stop to output a sound. Accordingly, the typing sound or the clicking sound stops to be output.

Furthermore, in this processing example, the CPU 11a generates control information that causes the sound source 93 to output a new sound. The "new sound" refers to a sound different from the sound output from the sound source 93 during the displaying process in the device 200.

Accordingly, as represented by a reference numeral "8C", a new sound indicating that the displaying process has ended is output.

Thereafter, as shown in the part (D) of Fig. 8, the sound source 93 enters a state where no sound is output from the sound source 93.

In a state as shown in the part (C) of Fig. 8, each nearby person 42 recognizes that the displaying process in the device 200 has ended. In addition, even in a state as shown in the part (D) of Fig. 8, each nearby person 42 recognizes that the displaying process in the device 200 has ended.

In the above description, a case where two sounds are output has been described. However, a configuration in which only one of the two sounds is output may also be adopted.

In the above description, one of the two sounds is output while the displaying process in the device 200 is being performed. Specifically, the above-described typing sound or clicking sound is output.

Furthermore, in a case where the displaying process in the device 200 ends, the other of the two sounds is output. Specifically, the new sound is output.

It is not necessary that the two sounds are output. A configuration in which only one of the two sounds is output may also be adopted.

In addition, the CPU 11a may generate control information that causes information indicating that making an utterance is possible to be output. Hereinafter, in the present specification, the information indicating that making an utterance is possible will be referred to as "utterance allowance information".

In this case, the CPU 11a generates control information that causes the utterance allowance information to be output from a nearby person reference device as a notification process ends.

The "nearby person reference device" refers to a device that the nearby person 42 refers to. Examples of the nearby person reference device include the above-described light emitting device 500, a smartphone, a tablet terminal, and a personal computer (PC). In addition, examples of the nearby person reference device also include the above-described device 200 mounted on the target person 41.

The device 200 may be mounted not only on the target person 41 but also on the nearby person 42. Therefore, the device 200 also corresponds to the nearby person reference device which is a device that the nearby person 42 refers to.

In the following description, a case where the utterance allowance information is displayed on the device 200 mounted on the nearby person 42 will be described as an example.

Note that the utterance allowance information may not be displayed on the device 200 and may be displayed on a smartphone, a tablet terminal, a PC, or the like.

Here, the device 200, a smartphone, a tablet terminal, a PC, or the like can be regarded as an individual device. The "individual device" refers to a device of each nearby person 42.

It can be said that the above-described notification with respect to the nearby person 42 in which vibration is used is an example of notification in which an individual device is used.

Examples of the individual device also include a wristwatch-type device and a ring-type device. Even in the case of the wristwatch-type device or the ring-type device, the above-described notification in which light, vibration, or a sound is used can be performed.

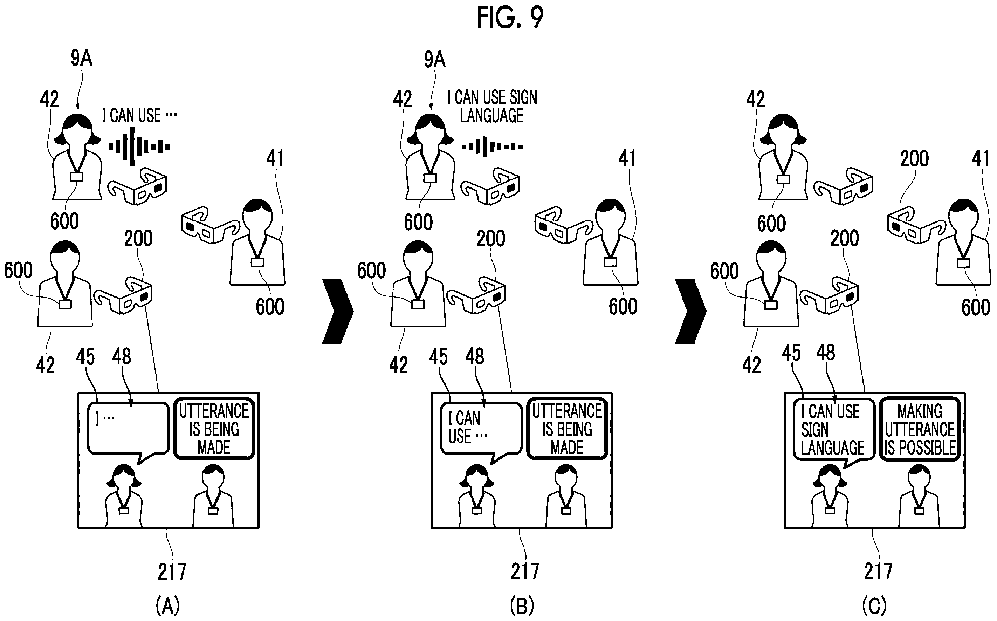

Parts (A) to (C) of Fig. 9 are diagrams showing a processing example in a case of outputting utterance allowance information.

The part (A) of Fig. 9 shows a situation where utterance of the nearby person 42 who is one of the plurality of nearby persons 42 and is represented by a reference numeral "9A" is started.

In this processing example, in this case, a text "the utterance is being made" is displayed on the device 200 mounted on the nearby person 42. Information indicating that the displaying process of the utterance content 48 is being performed is displayed on the device 200.

The part (B) of Fig. 9 shows a state immediately before the end of the utterance of the nearby person 42 represented by the reference numeral "9A". In this case as well, as with the above description, the text "the utterance is being made" is displayed on the device 200 mounted on the nearby person 42.

In this case as well, the information indicating that the displaying process of the utterance content 48 is being performed is displayed on the device 200.

The part (C) of Fig. 9 shows a situation where the displaying process in the device 200 mounted on the target person 41 has ended.

In a situation where the displaying process in the device 200 mounted on the target person 41 has ended, the text "the utterance is being made" displayed on the device 200 disappears. The text "the utterance is being made" displayed on the device 200 mounted on the nearby person 42 disappears.

Accordingly, in this case as well, the nearby person 42 is notified that a notification process regarding the utterance content 48 has ended.

Furthermore, in this processing example, as shown in the part (C) of Fig. 9, text information "making an utterance is possible" is displayed. In other words, in this processing example, the utterance allowance information is displayed.

In this example, as control information, control information that causes a change in content displayed on the device 200 mounted on the nearby person 42 is generated. In this processing example, the control information causes a change in content displayed on the display unit 217 of the device 200 mounted on the nearby person 42.

In the present exemplary embodiment, a transition from a state in which a text "the utterance is being made" is displayed to a state where the text has disappeared occurs.

In addition, a transition from a state where utterance allowance information "making an utterance is possible" is not displayed to a state where the utterance allowance information is displayed occurs.

Even in this processing example, in a state as shown in the part (C) of Fig. 9, the nearby person 42 recognizes that a time at which the nearby person 42 can make an utterance has been reached.

Note that a case where the nearby person 42 is notified of the utterance allowance information through text information has been described hereinabove. The way in which notification about the utterance allowance information is performed is not limited thereto.

A sound corresponding to the utterance allowance information may be output from the sound source 93 (refer to the parts (A) to (D) of Fig. 8).

Examples of the "sound corresponding to the utterance allowance information" include a sound obtained by reading the text information. Specifically, the examples include a sound obtained by reading out text information "making an utterance is possible".

In addition, the "sound corresponding to the utterance allowance information" may be a sound other than the sound obtained by reading the text information. Examples of the sound other than the sound obtained by reading the text information include a chime sound.

### [Notification Process for Each Utterer]

The CPU 11a may further generate control information that makes the way in which the nearby person 42 is notified of a notification situation different. More specifically, the CPU 11a may generate control information that makes the way in which the notification is performed different for each utterer.

In the present exemplary embodiment, the target person 41 is notified of the utterance content 48 of an utterer who is one of the nearby persons 42 and has made an utterance. In the present exemplary embodiment, the target person 41 is notified of the utterance content 48 for each utterer.

In the present exemplary embodiment, the CPU 11a specifies a notification situation for each utterer. The CPU 11a specifies, for each utterer, a notification situation regarding the utterance content 48 of the utterer.

The CPU 11a makes the way in which the nearby person 42 is notified of the notification situation specified for each utterer different for each utterer. The CPU 11a generates control information that makes the way in which the notification is performed different for each utterer.

Specifically, the CPU 11a generates, for example, control information that makes a light emission color of the above-described light emitting device 500 different for each utterer. The light emitting device 500 is a device used for notification about a notification situation.

The CPU 11a generates control information that makes a light emission color of the light emitting device 500, which is used for notification about a notification situation, different. Specifically, the CPU 11a generates control information that makes the light emission color different for each utterer.

In this case, the color of light emitted from the light emitting device 500 is changed each time the utterer is changed.

In this case, the nearby person 42 can specify which person's utterance content 48 the utterance content 48 that the target person 41 is being notified of is. In addition, in this case, the nearby person 42 can specify which utterer the notification performed with respect to the nearby person 42 relates to.

Note that a method of changing the way in which notification is performed may be a method other than a method of making a light emission color different.

For example, a light emission pattern of the light emitting device 500 may be made different for each utterer.

Alternatively, a sound output from the sound source 93 may be made different for each utterer.

Alternatively, for example, the way in which the vibration source vibrates may be made different for each utterer.

In addition, new information regarding an utterer may be displayed on a target person reference device or an individual device each time the utterer is changed.

### [Notification Related to Utterance of Registered Nearby Person]

In the present exemplary embodiment, notification related to an utterance of the registered nearby person 42, who is the nearby person 42 registered in advance, is performed with respect to the target person 41. In the present exemplary embodiment, notification related to an utterance of a non-registered person, who is a person other than the registered nearby person 42, is not performed with respect to the target person 41.

In the present exemplary embodiment, the non-registered person is not registered in the database, and furthermore, the non-registered person does not have the individual microphone 600.

Note that there may be a case where voice information of the non-registered person is acquired by the individual microphone 600 of the registered nearby person 42. In this case, the sound pressure of the voice information of the non-registered person is low, and the voice information is not transmitted to the management server 300.

The voice information of the non-registered person may be acquired by the individual microphone 600 of the registered nearby person 42. However, in this case, the voice information is not transmitted to the management server 300.

In this case, the CPU 11a specifies, as a notification situation, the situation of notification related to an utterance of the registered nearby person 42.

The CPU 11a specifies, as the notification situation, the situation of the notification that is related to the utterance of the registered nearby person 42 and that is performed with respect to the target person 41.

Notification regarding an utterance of the non-registered person is not performed with respect to the target person 41. In this case, the CPU 11a does not specify, as the notification situation, a notification situation regarding the utterance of the non-registered person.

In this case, the CPU 11a generates control information that causes notification about the notification situation related to the utterance of the registered nearby person 42 to be performed. The CPU 11a generates control information that causes notification about a notification situation regarding the registered nearby person 42 to be performed with respect to the nearby person 42.

The CPU 11a does not generate control information that causes notification about a notification situation regarding notification related to an utterance of the non-registered person to be performed. The CPU 11a does not generate control information that causes notification about a notification situation regarding the non-registered person to be performed with respect to the nearby person 42.

### [Others]

The above-described notification methods may be combined with each other.

In the above description, a case where light emission of the light emitting device 500, vibration of the vibration source, the outputting of a sound from the sound source 93, and the displaying of utterance allowance information are individually performed has been described. In the above, a case where a plurality of types of notification are individually performed has been described.

The way in which notification is performed is not limited thereto. Two or more of the plurality of types of notification may be performed with respect to the nearby person 42.

Alternatively, the above-described notification with respect to the nearby person 42 may be performed via the device 200 mounted on the target person 41. For example, the notification with respect to the nearby person 42 may be performed by means of a change in output of a light source (not shown) provided at an outer surface of the device 200.

In addition, in the above description, a case where the nearby person 42 is notified of the start of notification about the utterance content 48 or the end of the notification about the utterance content 48 has been described.

Alternatively, the nearby person 42 may be notified of a situation where the notification cannot be performed, a situation where there is a decrease in quality of the notification, or the like. In other words, the nearby person 42 may be notified of a situation where there is a problem with the notification with respect to the target person 41.

There may be a situation where the notification cannot be performed or a situation where there is a decrease in quality of the notification due to a malfunction or the like of the device 200 mounted on the target person 41.

The nearby person 42 may be notified of a situation where the notification cannot be performed or a situation where there is a decrease in quality of the notification. In other words, the nearby person 42 may be notified of a situation where there is a problem with the notification with respect to the target person 41.

A case where the nearby person 42 is notified of a situation where there is a problem with notification with respect to the target person 41 will be assumed.

In this case, the nearby person 42 is less likely to make an utterance in a situation where there is a problem with notification with respect to the target person 41.

In a case where notification about the situation where there is a problem with notification with respect to the target person 41 is to be performed as well, the light emitting device 500 emits light as with the above description. Alternatively, the vibrating of the vibration source, the outputting of the sound from the sound source 93, the displaying of information, and the like are performed.

Specifically, for example, the light emitting device 500 is caused to blink. In addition, for example, the light emitting device 500 is caused to emit light of a predetermined specific color, such as red.

In addition, for example, the magnitude of vibration of the vibration source is made large in comparison with a case where there is no problem as described above.

In addition, for example, the sound source 93 outputs a sound indicating that there is a problem.

In addition, for example, information indicating that there is a problem is displayed on the display unit 217 of the device 200.

Alternatively, as with the above description, two or more types of notification may be performed with respect to the nearby person 42.

In addition, in the above description, a case where the management server 300 which is an example of the information processing system specifies a notification situation and generates control information has been described.

A process of specifying the notification situation and generating the control information may be realized by one apparatus, such as one management server 300. In addition, the process of specifying the notification situation and generating the control information may be realized by a plurality of apparatuses.

The information processing system may be composed of a single apparatus or may be composed of a plurality of apparatuses.

### (Supplementary Note)

(((1))) An information processing system comprising:
   a processor configured to:
   specify a notification situation, which is a situation of notification that is related to an utterance of a nearby person who is a person positioned near a target person and that is performed with respect to the target person; and
   generate control information that causes notification about the specified notification situation to be performed with respect to the nearby person.
(((2))) The information processing system according to (((1))), wherein the processor is configured to:
   specify, as the notification situation, progress of the notification performed with respect to the target person; and
   generate, as the control information, control information that causes notification about the progress to be performed with respect to the nearby person.
(((3))) The information processing system according to (((2))), wherein the processor is configured to:
   specify, as the progress, progress of a displaying process of utterance content which is content of the utterance of the nearby person, the displaying process being a displaying process in a target person reference device which is a device that the target person refers to; and
   generate, as the control information, control information that causes notification about the progress of the displaying process in the target person reference device to be performed with respect to the nearby person.
(((4))) The information processing system according to (((3))), wherein the processor is configured to:
   generate, as the control information, control information that causes notification about an end of the displaying process in the target person reference device to be performed with respect to the nearby person.
(((5))) The information processing system according to any one of (((1))) to (((4))), wherein the processor is configured to:
   generate, as the control information, control information that causes output of a nearby person reference device, which is a device that the nearby person refers to, to be changed in accordance with the notification situation.
(((6))) The information processing system according to (((5))), wherein the processor is configured to:
   generate, as the control information, control information that causes the output of the nearby person reference device to be changed as the notification performed with respect to the target person ends.
(((7))) The information processing system according to (((6))), wherein the processor is configured to:
   generate, as the control information, control information that causes brightness of at least a part of the nearby person reference device to be changed as the notification performed with respect to the target person ends.
(((8))) The information processing system according to (((5))) or (((6))),
   wherein the target person is notified of utterance content which is content of the utterance of the nearby person,
   a notification process regarding the utterance content is performed with respect to the target person, and
   the processor is configured to:
      further generate control information that causes the nearby person reference device to output information indicating that making an utterance is possible as the notification process ends.
(((9))) The information processing system according to any one of (((1))) to (((8))), wherein the processor is configured to:
   generate, as the control information, control information that causes a change in sound output from a sound source in accordance with the situation of the notification performed with respect to the target person.
(((10))) The information processing system according to (((9))), wherein the processor is configured to:
   generate, as the control information, control information that causes the sound source not to output a sound as the notification performed with respect to the target person ends or to generate, as the control information, control information that causes the sound source to output a sound as the notification ends.
(((11))) The information processing system according to (((9))),
   wherein the target person is notified of utterance content which is content of the utterance of the nearby person,
   a notification process regarding the utterance content is performed with respect to the target person, and
   the processor is configured to:
      further generate control information that causes the sound source to output a sound corresponding to information indicating that making an utterance is possible as the notification process ends.
(((12))) The information processing system according to any one of (((1))) to (((11))), wherein the processor is configured to:
   generate, as the control information, control information that causes notification about the notification situation to be performed with respect to each nearby person through an individual device of each nearby person.
(((13))) The information processing system according to (((12))), wherein the processor is configured to:
   generate, as the control information, control information that causes a change in state of vibration of the individual device in accordance with the situation of the notification performed with respect to the target person.
(((14))) The information processing system according to (((12))) or (((13))), wherein the processor is configured to:
   generate, as the control information, control information that causes a change in content displayed on the individual device in accordance with the situation of the notification performed with respect to the target person.
(((15))) The information processing system according to (((14))),
   wherein the target person is notified of utterance content which is content of the utterance of the nearby person,
   a notification process regarding the utterance content is performed with respect to the target person, and
   the processor is configured to:
      further generate control information that causes the individual device to display information indicating that making an utterance is possible as the notification process ends.
(((16))) The information processing system according to any one of (((1))) to (((15))),
   wherein the target person is notified of utterance content which is content of an utterance of an utterer who is one of nearby persons and has made the utterance, and
   the processor is configured to:
      specify, as the notification situation, a notification situation regarding the utterance content of the utterer for each utterer; and
      further generate control information that makes a way in which the nearby persons are notified of the notification situation specified for each utterer different for each utterer.
(((17))) The information processing system according to any one of (((1))) to (((16))),
   wherein notification related to an utterance of a registered nearby person who is one of nearby persons and is registered in advance is performed with respect to the target person,
   notification related to an utterance of a non-registered person who is a person other than the registered nearby person is not performed with respect to the target person, and
   the processor is configured to:
      specify, as the notification situation, a notification situation which is a situation of the notification that is related to the utterance of the registered nearby person and that is performed with respect to the target person; and
      generate, as the control information, control information that causes notification about the notification situation regarding the notification related to the utterance of the registered nearby person to be performed with respect to the nearby persons.
(((18))) A program causing a computer to realize:
   a specifying function of specifying a notification situation, which is a situation of notification that is related to an utterance of a nearby person who is a person positioned near a target person and that is performed with respect to the target person; and
   a generating function of generating control information that causes notification about the specified notification situation to be performed with respect to the nearby person.

With the information processing system according to (((1))), it is possible to enable the nearby person positioned near the target person to be aware of the situation of the notification that is related to the utterance of the nearby person and that is performed with respect to the target person.

With the information processing system according to (((2))), it is possible to notify the nearby person of the progress of the notification performed with respect to the target person.

With the information processing system according to (((3))), it is possible to notify the nearby person of the progress of the displaying process in the target person reference device that the target person refers to.

With the information processing system according to (((4))), it is possible to notify the nearby person of the end of the displaying process in the target person reference device.

With the information processing system according to (((5))), it is possible to change the output of the nearby person reference device, which is the device the nearby person refers to, in accordance with the notification situation.

With the information processing system according to (((6))), it is possible to change the output of the nearby person reference device as the notification performed with respect to the target person ends.

With the information processing system according to (((7))), it is possible to notify the nearby person that the notification performed with respect to the target person has ended by using a change in the brightness of at least a part of the nearby person reference device.

With the information processing system according to (((8))), it is possible to notify the nearby person that making an utterance is possible.

With the information processing system according to (((9))), it is possible to notify the nearby person of the situation of the notification performed with respect to the target person by using the sound.

With the information processing system according to (((10))), it is possible to notify the nearby person that the notification performed with respect to the target person has ended by using the sound.

With the information processing system according to (((11))), it is possible to notify the nearby person that making an utterance is possible.

With the information processing system according to (((12))), it is possible to individually notify each nearby person of the situation of the notification performed with respect to the target person.

With the information processing system according to (((13))), it is possible to notify the nearby person of the situation of the notification performed with respect to the target person by using the vibration of the individual device.

With the information processing system according to (((14))), it is possible to notify the nearby person of the situation of the notification performed with respect to the target person through the content displayed on the individual device.

With the information processing system according to (((15))), it is possible to notify the nearby person that making an utterance is possible through the information displayed on the individual device.

With the information processing system according to (((16))), it is possible to notify the nearby persons of which nearby person's utterance the notification performed with respect to the target person relates to.

With the information processing system according to (((17))), it is possible to notify the nearby persons of the situation of the notification related to the utterance of the nearby person registered in advance.

With the program according to (((18))), it is possible to enable the nearby person positioned near the target person to be aware of the situation of the notification that is related to the utterance of the nearby person and that is performed with respect to the target person.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: notification system
11a: CPU
41: target person
42: nearby person
91: individual device
93: sound source
200: device
300: management server
500: light emitting device

## Claims

1. An information processing system comprising:
a processor configured to:
specify a notification situation, which is a situation of notification that is related to an utterance of a nearby person who is a person positioned near a target person and that is performed with respect to the target person; and
generate control information that causes notification about the specified notification situation to be performed with respect to the nearby person.

2. The information processing system according to claim 1, wherein the processor is configured to:
specify, as the notification situation, progress of the notification performed with respect to the target person; and
generate, as the control information, control information that causes notification about the progress to be performed with respect to the nearby person.

3. The information processing system according to claim 2, wherein the processor is configured to:
specify, as the progress, progress of a displaying process of utterance content which is content of the utterance of the nearby person, the displaying process being a displaying process in a target person reference device which is a device that the target person refers to; and
generate, as the control information, control information that causes notification about the progress of the displaying process in the target person reference device to be performed with respect to the nearby person.

4. The information processing system according to claim 3, wherein the processor is configured to:
generate, as the control information, control information that causes notification about an end of the displaying process in the target person reference device to be performed with respect to the nearby person.

5. The information processing system according to any one of claims 1 to 4, wherein the processor is configured to:
generate, as the control information, control information that causes output of a nearby person reference device, which is a device that the nearby person refers to, to be changed in accordance with the notification situation.

6. The information processing system according to claim 5, wherein the processor is configured to:
generate, as the control information, control information that causes the output of the nearby person reference device to be changed as the notification performed with respect to the target person ends.

7. The information processing system according to claim 6, wherein the processor is configured to:
generate, as the control information, control information that causes brightness of at least a part of the nearby person reference device to be changed as the notification performed with respect to the target person ends.

8. The information processing system according to claim 5 or 6,
wherein the target person is notified of utterance content which is content of the utterance of the nearby person,
a notification process regarding the utterance content is performed with respect to the target person, and
the processor is configured to:
further generate control information that causes the nearby person reference device to output information indicating that making an utterance is possible as the notification process ends.

9. The information processing system according to any one of claims 1 to 8, wherein the processor is configured to:
generate, as the control information, control information that causes a change in sound output from a sound source in accordance with the situation of the notification performed with respect to the target person.

10. The information processing system according to claim 9, wherein the processor is configured to:
generate, as the control information, control information that causes the sound source not to output a sound as the notification performed with respect to the target person ends or to generate, as the control information, control information that causes the sound source to output a sound as the notification ends.

11. The information processing system according to claim 9,
wherein the target person is notified of utterance content which is content of the utterance of the nearby person,
a notification process regarding the utterance content is performed with respect to the target person, and
the processor is configured to:
further generate control information that causes the sound source to output a sound corresponding to information indicating that making an utterance is possible as the notification process ends.

12. The information processing system according to any one of claims 1 to 11, wherein the processor is configured to:
generate, as the control information, control information that causes notification about the notification situation to be performed with respect to each nearby person through an individual device of each nearby person.

13. The information processing system according to claim 12, wherein the processor is configured to:
generate, as the control information, control information that causes a change in state of vibration of the individual device in accordance with the situation of the notification performed with respect to the target person.

14. The information processing system according to claim 12 or 13, wherein the processor is configured to:
generate, as the control information, control information that causes a change in content displayed on the individual device in accordance with the situation of the notification performed with respect to the target person.

15. The information processing system according to claim 14,
wherein the target person is notified of utterance content which is content of the utterance of the nearby person,
a notification process regarding the utterance content is performed with respect to the target person, and
the processor is configured to:
further generate control information that causes the individual device to display information indicating that making an utterance is possible as the notification process ends.

16. The information processing system according to any one of claims 1 to 15,
wherein the target person is notified of utterance content which is content of an utterance of an utterer who is one of nearby persons and has made the utterance, and
the processor is configured to:
specify, as the notification situation, a notification situation regarding the utterance content of the utterer for each utterer; and
further generate control information that makes a way in which the nearby persons are notified of the notification situation specified for each utterer different for each utterer.

17. The information processing system according to any one of claims 1 to 16,
wherein notification related to an utterance of a registered nearby person who is one of nearby persons and is registered in advance is performed with respect to the target person,
notification related to an utterance of a non-registered person who is a person other than the registered nearby person is not performed with respect to the target person, and
the processor is configured to:
specify, as the notification situation, a notification situation which is a situation of the notification that is related to the utterance of the registered nearby person and that is performed with respect to the target person; and
generate, as the control information, control information that causes notification about the notification situation regarding the notification related to the utterance of the registered nearby person to be performed with respect to the nearby persons.

18. A program causing a computer to realize:
a specifying function of specifying a notification situation, which is a situation of notification that is related to an utterance of a nearby person who is a person positioned near a target person and that is performed with respect to the target person; and
a generating function of generating control information that causes notification about the specified notification situation to be performed with respect to the nearby person.
